# FASCICULE DE BREVET EUROPEEN

(11) **EP 2 861 640 B1**
(45) Date de publication et mention de la délivrance du brevet: **08.11.2017**
(21) Numéro de dépôt: 13730294.9
(22) Date de dépôt: 29.05.2013
(51) Int. Cl.: C08F 265/10, C08F 293/00, C08F 273/00

(54) **NOUVEAU COPOLYMÈRE EN PEIGNE ET PROCÉDÉ POUR SA PRÉPARATION**
NEUARTIGES KAMMCOPOLYMER UND VERFAHREN ZUR HERSTELLUNG DAVON
NOVEL COMB COPOLYMER AND PROCESS FOR THE PREPARATION THEREOF

(30) Priorité: 15.06.2012 FR 1255617
(43) Date de publication de la demande: 22.04.2015
(73) Titulaire: Societe D Exploitation De Produits Pour Les Industries Chimiques Seppic, 75007 Paris (FR)
(72) Inventeur: BRAUN, Olivier, 42170 St Just St Rambert (FR); MALLO, Paul, F-78110 Le Vésinet (FR)
(74) Mandataire: Conan, Philippe Claude
(86) Numéro de dépôt international: PCT/FR2013/051204
(87) Numéro de publication internationale: WO 2013/186455

(56) Documents cités:
- EP-A1- 0 562 344
- EP-A1- 0 936 228
- FR-A1- 2 886 301
- US-A1- 2008 234 391
- LIU R ET AL: "A study of thermoassociative gelation of aqueous cationic poly(N-isopropyl acrylamide) graft copolymer solutions", POLYMER, ELSEVIER SCIENCE PUBLISHERS B.V, GB, vol. 50, no. 6, 6 mars 2009 (2009-03-06), pages 1456-1462, XP025992737, ISSN: 0032-3861, DOI: 10.1016/J.POLYMER.2009.01.035 [extrait le 2009-01-23]

## Description

La présente demande de brevet a pour objet un nouveau procédé de préparation copolymères greffés hydrosolubles.

Les polymères thermo-épaississants sont des polymères dont la viscosité varie considérablement en fonction de la température. Ils sont notamment caractérisés par une température dite critique, au-delà de laquelle la viscosité de leur solution aqueuse augmente très nettement, le plus souvent d'un facteur de plusieurs dizaines.

La demande internationale WO 00/40958 décrit un procédé de préparation de copolymères d'acrylamide et de poly(N-isopropyl acrylamide) incluant les étapes successives suivantes :
(a) la synthèse d'un télomère de N-isopropyl acrylamide (NIPAM) par polymérisation radicalaire ;
(b) l'isolation du télomère obtenu, (PNIPAM)ₓ-NH₂ par précipitation dans l'éther, filtration puis séchage ;
(c) la réaction dans le chlorure de méthylène, de (PNIPAM)ₓ-NH₂ avec un large excès d'acide acrylique en présence de cyclohexyl carbodiimide pour conduire au macro-monomère poly-(NIPAM) porteur d'une fonction acryloyle en bout de chaîne (PNIPAM)ₓ ;
(d) l'isolation du macro-monomère obtenu par précipitation dans l'éther, filtration puis séchage ;
(e) la copolymérisation du macro monomère obtenu avec de l'acrylamide (AM) ou du diméthylacrylamide (DMA) dans l'eau, pour obtenir les copolymères greffés à segment (PNIPAM)ₓ, AM-g-(PNIPAM)ₓ ou DMA-g-(PNIPAM)ₓ;
(f) La purification par précipitation dans l'eau pour DMA/(PNIPAM)ₓ ou dans l'acétone pour AM/(PNIPAM)ₓ, puis ultrafiltration.

La demande internationale publiée sous le numéro WO 2007/000535 divulgue un procédé de préparation de polymères greffés, en limitant autant que faire se peut, l'utilisation de solvants organiques et plus particulièrement un procédé de préparation d'un copolymère en peigne dont le squelette est du type acrylamide, acide acrylique, acryloylamino éthanol ou diméthylacrylamide, sur lequel sont greffés des segments latéraux poly(N-alkyl acrylamide) ou poly(N,N-dialkyl acrylamide), comprenant les étapes successives suivantes :
(a) La préparation d'un télomère poly(N-alkyl acrylamide) ou poly(N,N-dialkyl acrylamide), de formule (I) :

   H₂N-R₁-Z-{CH₂-C(R₂)[C(=O)N(R₃)(R₄)]-}ₙ-H (I)

   dans laquelle n représente un nombre entier supérieur ou égal à 2 et inférieur ou égal à 100, Z représente une fonction susceptible de jouer le rôle d'agent de transfert de radicaux, R₁ représente un radical divalent comportant de 1 à 4 atomes de carbone, R₂ un atome d'hydrogène ou un radical méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, par réaction dans l'eau d'un composé de formule (II) :

   CH₂=C(R₂)-C(=O)N(R₃)(R₄) (II)

   dans laquelle R₂, R₃ et R₄ sont tels que définis ci-dessus, avec un composé limiteur de chaîne de formule (III) :

   Z-R₁-NH₂ (III)

   dans laquelle Z représente une fonction susceptible de jouer le rôle d'agent de transfert de radicaux dans un rapport molaire (II) / (III) inférieur ou égal à n et supérieur ou égal à n/10, en présence d'un initiateur de polymérisation ;
(b) l'isolation du télomère de formule (I) obtenu à l'étape (a) ;
(c) la réaction dans l'eau du télomère de formule (I) obtenu à l'étape (b), avec le chlorure d'acide de formule (IV) :

   CH₂=C(R₅)-C(=O)-Cl (IV)
Dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 6 et 13, et de préférence entre 7 et 8, pour obtenir un macromonomère de formule (V):

CH₂=C(R₅)-C(=O)NH-R₁-Z-{CH₂-C(R₂)[C(=O)N(R₃)(R₄)]-}ₙ-H (V)

(d) l'isolation du macro-monomère de formule (V) obtenu à l'étape (c) ;
(e) la copolymérisation dans l'eau, du macromonomère de formule (V) isolé à l'étape (d), avec un monomère choisi parmi l'acrylamide, l'acide acrylique, l'acryloylaminoéthanol ou le diméthylacrylamide et si désiré,
(f) La purification du copolymère peigne obtenu.

Or, si le procédé ainsi divulgué fonctionne parfaitement lorsque le squelette principal est constitué d'un enchaînement de monomères neutres, il n'en n'est pas de même lorsque l'on souhaite remplacer ces monomères neutres par des monomères ioniques comme l'acide acrylique ou encore l'acide 2-acrylamido 2-méthyl propanesulfonique (ATBS). Il se produit en effet un phénomène dit de "salting out", qui provoque la polymérisation du macromonomère, destiné à former les chaînes pendantes, comme le macromonomère de poly(N-isopropyl acrylamide).

Les inventeurs ont donc cherché à mettre au point un procédé qui ne présente pas l'inconvénient exposé ci-dessus.

C'est pourquoi selon un premier aspect, l'invention a pour objet un procédé de préparation d'un copolymère en peigne dont le squelette est du type acide 2-acrylamido 2-méthyl propanesulfonique (ATBS), sur lequel sont greffés des segments latéraux poly(N-alkyl acrylamide) ou poly(N,N-dialkyl acrylamide), caractérisé en ce qu'il comprend les étapes successives suivantes :
- Une étape (a) de réaction d'un composé de formule (II) :

   CH₂=C(R₂)-C(=O)-N(R₃)(R₄) (II),

   dans laquelle R₂ représente un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, avec un composé limiteur de chaîne de formule (III) :

   Z-R₁-NH₂ (III),

   dans laquelle R₁ représente un radical divalent comportant de 1 à 4 atomes de carbone, et Z représente une fonction susceptible de jouer le rôle d'agent de transfert de radicaux, en présence d'un initiateur de polymérisation, dans un mélange tertio-butanol / eau, pour obtenir un télomère poly(N-alkyl acrylamide) ou poly(N,N-dialkyl acrylamide), de formule (I) :

   H₂N-R₁-Z-{CH₂-C(R₂)[C(=O)N(R₃)(R₄)]-}ₙ-H (I)

   dans laquelle n représente un nombre entier supérieur ou égal à 2 et inférieur ou égal à 100, Z représente une fonction susceptible de jouer le rôle d'agent de transfert de radicaux, optionnellement
- Une étape (b) d'isolation et/ou de séchage dudit télomère de formule (I) obtenu à l'étape (a) ;
- Une étape (c) de réaction dans le tertio-butanol du télomère de formule (I) obtenu à l'étape (a), ou optionnellement à l'étape (b), avec un chlorure d'acide de formule (IV) :

   CH₂=C(R₅)-C(=O)-Cl (IV)

   dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 8 et 10, pour obtenir une solution du macromonomère de formule (V):

   CH₂=C(R₅)-C(=O)NH-R₁-Z-{CH₂-C(R₂)[C(=O)N(R₃)(R₄)]-}ₙ-H (V) ;

   optionnellement
   - Une étape (d) d'isolation et/ou de séchage dudit macromonomère de formule (V) obtenu à l'étape (c) ;
   - Une étape (e) de copolymérisation dans le tertio-butanol, du macromonomère de formule (V) issu de l'étape (c) ou de l'étape (d), avec le sel d'ammonium de l'acide 2-acrylamido 2-méthyl propanesulfonique et si désiré,
   - Une étape (f) de purification du copolymère peigne obtenu à l'étape (e).

Par mélange tertio-butanol/eau, on désigne dans le procédé tel que défini ci-dessus un mélange dont la proportion volumique en eau est inférieure ou égal à 50%.

Selon un aspect particulier du procédé tel que défini ci-dessus, dans la formule (II), R₂ et R₃ représentent chacun un atome d'hydrogène, et R₄ représente un radical isopropyle.

Comme exemple de copolymère en peigne dont le squelette est du type acide 2-acrylamido 2-méthyl propanesulfonique, sur lequel sont greffés des segments latéraux poly(N-alkyl (meth)acrylamide) ou poly(N,N-dialkyl (méth)acrylamide) il y a celui dans lequel lesdits segments latéraux sont choisis parmi les segments latéraux suivants :
- Segments latéraux poly(N-méthyl méthacrylamide),
- Segments latéraux poly(N-éthyl méthacrylamide),
- Segments latéraux poly(N-propyl méthacrylamide),
- Segments latéraux poly(N-isopropyl méthacrylamide),
- Segments latéraux poly[N-(2-hydroxy éthyl) méthacrylamide],
- Segments latéraux poly(N,N-diméthyl méthacrylamide),
- Segments latéraux poly(N,N-diéthyl méthacrylamide),
- Segments latéraux poly(N-méthyl acrylamide),
- Segments latéraux poly(N-éthyl acrylamide),
- Segments latéraux poly(N-propyl acrylamide),
- Segments latéraux poly(N-isopropyl acrylamide),
- Segments latéraux poly[N-(2-hydroxy éthyl) acrylamide],
- Segments latéraux poly(N,N-diméthyl acrylamide),
- Segments latéraux poly(N,N-diéthyl acrylamide)
et plus particulièrement un copolymère en peigne tel que défini ci-dessus, dans lequel lesdits segments latéraux sont choisis parmi les segments latéraux suivants :
- Segments latéraux poly(N-isopropyl acrylamide),
- Segments latéraux poly[N-(2-hydroxy éthyl) acrylamide],
- Segments latéraux poly(N,N-diméthyl acrylamide) et
- Segments latéraux poly(N,N-diéthyl acrylamide).

L'exemple suivant illustre l'invention sans toutefois la limiter. Il met en évidence que l'on peut préparer des polymères peignes sans squelette acrylamide à segment latéraux de type N-alkyl acrylamide, qui soient thermo-épaississants.

### Préparation d'un copolymère en peigne à squelette du type ATBS, sur lequel sont greffés des segments latéraux poly(N-isopropyl acrylamide) ATBS-g-NIPAM.

### (1) Préparation d'un télomère poly(N-isopropyl acrylamide)

On dissout dans un réacteur thermostaté, 435g de N-isopropyl acrylamide (NIPAM) dans un mélange tertio-butanol-eau (50/50 en volume) jusqu'à atteindre 1.000g, que l'on agite sous barbotage d'azote pendant environ 1 heure et demi. On ajoute ensuite du chlorhydrate de 2-amino éthanethiol (AET.HCl) dans un rapport molaire NIPAM/AET.HCl déterminé d'environ 48/1. La polymérisation est initiée avec du peroxyde de dilauroyle en portant la température à 60°C, puis on laisse le milieu réactionnel sous agitation et barbotage d'azote pendant encore 2 heures. On obtient un mélange réactionnel final blanc et pâteux

### (2) Préparation du macromonomère

On ajoute au milieu réactionnel obtenu à l'étape (1) maintenu à une température de 10 °C, une solution de potasse (0,16N), dans le tertio-butanol, et du chlorure d'arcryloyle en maintenant le pH autour de 9. En fin de réaction, la teneur en macromonomère de NIPAM est 17,8% massique et la teneur en eau de 10,7% massique.

### (3) Synthèse du copolymère

On dilue 61,8 g du milieu réactionnel obtenu à l'étape (2) dans 170g de tertio-butanol dans le réacteur thermostaté à 15°C; On y ajoute 77g du sel d'ammonium de l'acide 2-acrylamido 2-méthyl propanesulfonique, puis 0,44g de triacrylate de triméthylol propane. La polymérisation est amorcée avec du peroxyde de dilauroyle et le milieu est laissé sous agitation pendant quatre heures en maintenant la température à 60°C.
Le polymère qui a précipité lors de la polymérisation est récupéré par filtration. Après séchage on obtient le copolymère recherché sous forme de poudre.

On constate qu'une solution à 1% massique du polymère dans l'eau est légèrement visqueuse. Après chauffage jusqu'à 80°C, il y a formation d'un gel qui est caractéristique d'un polymère thermo-épaississant.

## Revendications

1. Procédé de préparation d'un copolymère en peigne dont le squelette est du type acide 2-acrylamido 2-méthyl propanesulfonique, sur lequel sont greffés des segments latéraux poly(N-alkyl acrylamide) ou poly(N,N-dialkyl acrylamide), **caractérisé en ce qu'**il comprend les étapes successives suivantes :
- Une étape (a) de réaction d'un composé de formule (II) :
CH₂=C(R₂)-C(=O)-N(R₃)(R₄) (II),
dans laquelle R₂ représente un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, avec un composé limiteur de chaîne de formule (III) :
Z-R₁-NH₂ (III),
dans laquelle R₁ représente un radical divalent comportant de 1 à 4 atomes de carbone, et Z représente une fonction susceptible de jouer le rôle d'agent de transfert de radicaux, en présence d'un initiateur de polymérisation, dans un mélange tertio-butanol-eau, pour obtenir un télomère poly(N-alkyl acrylamide) ou poly(N,N-dialkyl acrylamide), de formule (I) :
H₂N-R₁-Z-{CH₂-C(R₂)[C(=O)N(R₃)(R₄)]-}ₙ-H (I)
dans laquelle n représente un nombre entier supérieur ou égal à 2 et inférieur ou égal à 100, Z représente une fonction susceptible de jouer le rôle d'agent de transfert de radicaux, optionnellement
- Une étape (b) d'isolation et/ou de séchage dudit télomère de formule (I) obtenu à l'étape (a) ;
- Une étape (c) de réaction dans le tertio-butanol du télomère de formule (I) obtenu à l'étape (a), ou optionnellement à l'étape (b), avec un chlorure d'acide de formule (IV) :
CH₂=C(R₅)-C(=O)-Cl (IV)
dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 8 et 10, pour obtenir une solution du macromonomère de formule (V):
CH₂=C(R₅)-C(=O)NH-R₁-Z-{CH₂-C(R₂)[C(=O)N(R₃)(R₄)]-}ₙ-H (V)
optionnellement
- Une étape (d) d'isolation et/ou de séchage dudit macromonomère de formule (V) obtenu à l'étape (c) ;
- Une étape (e) de copolymérisation dans le tertio-butanol, du macromonomère de formule (V) issu de l'étape (c) ou de l'étape (d), avec le sel d'ammonium de l'acide 2-acrylamido 2-méthyl propanesulfonique et si désiré ;
- Une étape (f) de purification du copolymère peigne obtenu à l'étape (e).

2. Procédé tel que défini à la revendication 1, pour lequel dans la formule (II), R₂ et R₃ représentent chacun un atome d'hydrogène, et R₄ représente un radical isopropyle.

## Patentansprüche

1. Verfahren zur Herstellung eines Kammcopolymers, dessen Hauptkette vom Typ 2-Acrylamido-2-methylpropansulfonsäure ist, an die Poly(N-alkylacrylamid)- oder Poly(N,N-dialkylacrylamid)-Seitensegmente gepfropft sind, **dadurch gekennzeichnet, dass** es die folgenden aufeinanderfolgenden Schritte umfasst:
- einen Schritt (a) des Reagierens einer Verbindung der Formel (II):
CH₂=C(R₂)-C(=O)-N(R₃)(R₄) (II),
in der R₂ für ein Wasserstoffatom oder eine Methylgruppe steht, R₃ für ein Wasserstoffatom oder ein geradkettiges oder verzweigtes Alkylradikal, das 1 bis 4 Kohlenstoffatome umfasst, und R₄, das mit R₃ identisch oder davon verschieden ist, für ein geradkettiges oder verzweigtes Alkylradikal steht, das 1 bis 4 Kohlenstoffatome umfasst, mit einer Kettenabbruchverbindung der Formel (III):
Z-R₁-NH₂ (III),
in der R1 für ein zweiwertiges Radikal steht, das 1 bis 4 Kohlenstoffatome umfasst, und Z für eine Funktion steht, die in der Lage ist, in Gegenwart eines Polymerisationsinitiators in einem tert.-Butanol-Wasser-Gemisch die Rolle als Radikalübertragungsmittel zu spielen, um ein Poly(N-alkylacrylamid)- oder Poly(N,N-dialkylacrylamid)-Telomer der Formel (I) zu erhalten:
H₂N-R₁-Z-{CH₂-C(R₂)[C(=O)N(R₃)(R₄)]-}ₙ-H (1),
in der n für eine ganze Zahl größer oder gleich 2 und kleiner oder gleich 100 steht, Z für eine Funktion steht, die in der Lage ist, die Rolle als Radikalübertragungsmittel zu spielen, gegebenenfalls
- einen Schritt (b) des Isolierens und/oder des Trocknens des im Schritt (a) erhaltenen Telomers der Formel (I);
- einen Schritt (c) des Reagierens, in dem tert.-Butanol, des im Schritt (a), oder gegebenenfalls im Schritt (b) erhaltenen Telomers der Formel (I) mit einem Säurechlorid der Formel (IV):
CH₂=C(R₅)-C(=O)-Cl (IV),
in der R₅ für ein Wasserstoffatom oder ein Methylradikal und in einem Molverhältnis (IV) / (III) kleiner oder gleich 10 und größer oder gleich 1 unter Beibehaltung des pH-Wertes des Reaktionsmediums bei einem Wert im Bereich zwischen 8 und 10 steht, um eine Lösung des Makromonomers der Formel (V) zu erhalten:
CH₂=C(R₅)-C(=O)NH-R₁-Z-{CH₂-C(R₂)[C(=O)N(R₃)(R₄)]-}ₙ-H (V),
gegebenenfalls
- einen Schritt (d) des Isolierens und/oder des Trocknens des im Schritt (c) erhaltenen Makromonomers der Formel (V);
- einen Schritt (e) der Copolymerisation, in dem tert.-Butanol, des aus dem Schritt (c) oder dem Schritt (d) stammenden Makromonomers der Formel (V) mit dem Ammoniumsalz der 2-Acrylamido-2-methylpropansulfonsäure und falls gewünscht;
- einen Schritt (f) des Reinigens des im Schritt (e) erhaltenen Kammcopolymers.

2. Verfahren nach Anspruch 1, wobei in der Formel (II) R₂ und R₃ je für ein Wasserstoffatom stehen, und R₄ für ein Isopropylradikal steht.

## Claims

1. Method for preparing a comb copolymer, the backbone of which is 2-acrylamido 2-methylpropane sulfonic acid, on which poly(N-alkyl acrylamide) or poly(N,N-dialkyl acrylamide) lateral segments are grafted, **characterised in that** it comprises the following sequence of steps:
- a step (a) of reacting a compound of formula (II):
CH₂=C(R₂)-C(=O)-N(R₃)(R₄) (II),
in which R₂ represents a hydrogen atom or a methyl group, R₃ represents a hydrogen atom or a linear or branched alkyl radical comprising 1 to 4 carbon atoms and R₄, identical or different from R₃, represents a linear or branched alkyl radical comprising 1 to 4 carbon atoms, with a chain limiting compound of formula (III):
Z-R₁-NH₂ (III),
in which R₁ represents a divalent radical comprising 1 to 4 carbon atoms, and Z represents a functional group capable of acting as a transfer agent for radicals, in the presence of a polymerisation initiator, in a tert-butanol/water mixture, in order to obtain a poly(N-alkyl acrylamide) or poly(N,N-dialkyl acrylamide) telomer, of formula (I):
H₂N-R₁-Z-{CH₂-C(R₂)[C(=O)N(R₃)(R₄)]-}ₙ-H (I)
in which n is an integer greater than or equal to 2 and less than or equal to 100, Z is a functional group capable of acting as a transfer agent of radicals, optionally
- a step (b) of isolating and/or drying said telomer of formula (I) obtained in step (a);
- a step (c) of reacting, in the tert-butanol, the telomer of formula (I) obtained in step (a), or optionally in step (b), with an acid chloride of formula (IV):
CH₂=C(R₅)-C(=O)-Cl (IV)
in which R₅ is a hydrogen atom or a methyl radical, and in a molar ratio (IV)/(III) less than or equal to 10 and greater than or equal to 1, while maintaining the pH of the reaction medium at a value of between 8 and 10, in order to obtain a solution of the macromonomer of formula (V):
CH₂=C(R₅)-C(=O)NH-R₁-Z-{CH₂-C(R₂)[C(=O)N(R₃)(R₄)]-}ₙ-H (V)
optionally
- a step (d) of isolating and/or drying said macromonomer of formula (V) obtained in step (c);
- a step (e) of copolymerisation in tert-butanol of the macromonomer of formula (V) coming from step (c) or step (d), with the ammonia salt of 2-acrylamido 2-methylpropane sulfonic acid and, if desired;
- a step (f) of purifying the comb copolymer obtained in step (e).

2. Method such as defined in claim 1, for which, in formula (II), R₂ and R₃ each represent a hydrogen atom, and R₄ represents an isopropyl radical.
